# EUROPEAN PATENT SPECIFICATION

(11) **EP 1 929 216 B1**
(45) Date of publication and mention of the grant of the patent: **27.07.2011**
(21) Application number: 06792287.2
(22) Date of filing: 27.09.2006
(51) Int. Cl.: F24F 13/24, B64D 13/00, B64D 13/08, F24F 13/08

(54) **LOW-NOISE VOLUME FLOW RATE THROTTLING OF FLUID-CARRYING PIPES**
GERÄUSCHARME VOLUMENDURCHFLUSSDROSSELUNG FÜR FLUIDFÜHRENDE ROHRE
ETRANGLEMENT DU DEBIT VOLUMETRIQUE D'UN FLUIDE A FAIBLE BRUIT POUR DES CONDUITES TRANSPORTANT DU FLUIDE

(30) Priority: 29.09.2005 DE 102005046728; 29.09.2005 US 722024 P
(43) Date of publication of application: 11.06.2008
(73) Proprietor: Airbus Deutschland GmbH, 21129 Hamburg (DE)
(72) Inventor: VIERTEL, Martin, 22761 Hamburg (DE); BOOCK, Klaus, 23714 Timmdorf (DE)
(74) Representative: Kopf, Korbinian Paul
(86) International application number: PCT/EP2006/009400
(87) International publication number: WO 2007/039212

(56) References cited:
- DE-B3- 10 331 085
- DE-U1-202005 003 476
- GB-A- 1 005 966
- US-A- 3 714 884
- US-A- 4 726 563
- US-A- 5 465 756

## Description

### Reference to related applications

This application claims the benefit of the filing date of German Patent Application No 10 2005 046 728.8 filed 29 September 2005 and of United States Provisional Patent Application No. 60/722,024 filed 29 September 2005

### Technical Field

The present invention relates in general to the technical area of fluid mechanics and acoustics. In particular, the present invention relates to a fluid throttle screen, with which the volume flow rate in a fluid-carrying pipe may be reduced with low noise. Furthermore, the present invention relates to the use of such a throttle screen in an aircraft climate control system and a climate control system for an aircraft in which at least one fluid-carrying pipe branch is equipped with an above-mentioned throttle screen for volume flow control.

### Background of the invention

Climate control systems, particularly those which are used in aircraft, frequently comprise a strongly branched pipe system having a large number of pipe branches to supply the passenger cabin with air-conditioned fresh air. In order to be able to supply different passenger areas intentionally with different quantities of fresh air or in order to ensure that even those passenger areas which are very far from the climate control system are still supplied with sufficient fresh air, throttle screens are typically installed in the pipe branches depending on the passenger area and distance from the climate control system in order to be able to control the fluid volume flow rate in the individual pipe branches in a targeted way.

It would, of course, also be possible to dimension the individual pipe branches using different diameters to control the volume flow rate amount in the particular pipe branches, but this represents a significant effort in technical implementation, which may be avoided easily with the aid of the above-mentioned throttle screens. Notwithstanding this, the pipeline systems must typically be dimensioned newly and separately in each case for different airlines, since most airlines have different requirements for the fresh air supply of different passenger areas, such as the first and second classes. This is made even more difficult/because even in identical aircraft types, the different passenger classes are of different sizes for different airlines, which in turn results in the pipeline systems having to be dimensioned separately.

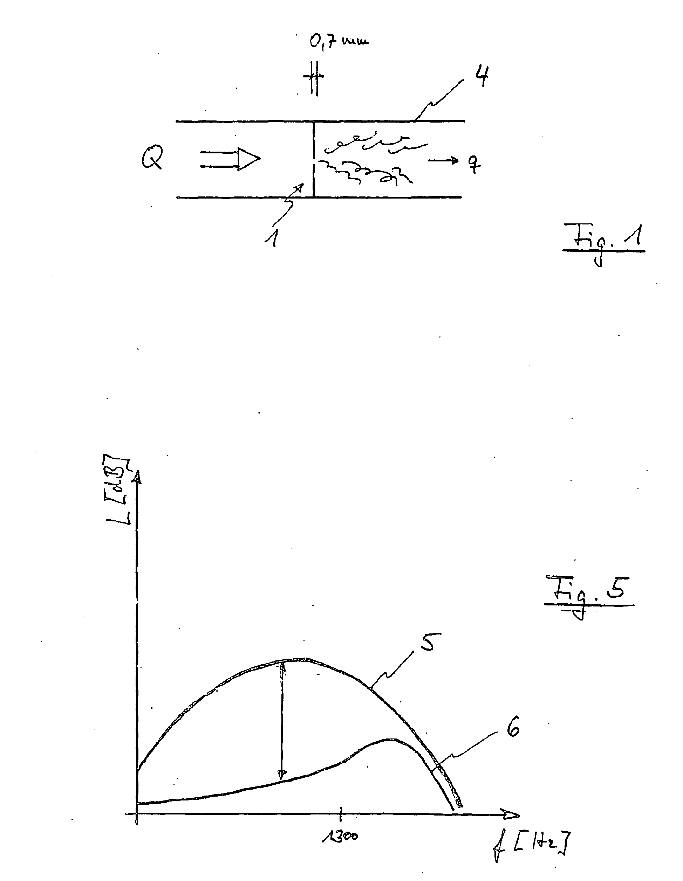

In order to avoid this dimensioning effort in pipeline systems for aircraft climate control systems, a standard pipeline system is typically pre-dimensioned for every aircraft type, which may then be tailored in the individual case to the particular needs using the above-mentioned throttle screens. Screens of this type are disclosed in US 3,714,884, which is regarded as the closest prior art. They are typically implemented as single-hole or multihole screens, by which a pressure reduction may be achieved over the throttle screen in the flow direction, by which the fluid volume flow rate may be throttled in the downstream pipe section. The known throttle screens have been shown to be problematic, however because a broadband noise level results due to the pressure reduction and the inflow turbulence, which is caused by the frequently strong swirl formation behind the screen, as is shown in Figure 1.

### Summary of the invention

Preceding from the problems connected with the known throttle screens, an object of the present invention is to specify a throttle screen for controlling a fluid volume flow rate which generates a lower noise level than the known single-hole or multihole screens as a fluid flows through it.

This object is achieved according to a first aspect of the present invention by a fluid throttle screen, which is adapted to control a fluid volume flow rate in a pipe and which has a plurality of friction elements extending longitudinally in a flow direction of the pipe. For this purpose, the individual friction elements of the plurality of friction elements are situated at a distance to one another in such a way that a fluid flowing against the fluid throttle screen is throttled continuously in its volume flow rate over the extension of the fluid throttle screen in the flow direction as a result of friction on the individual friction elements of the plurality of friction elements. In contrast to the known single-hole or multihole screens, the throttling does not occur punctually and abruptly at the screen here; rather, the inflow pressure of the fluid is throttled continuously and successively over the longitudinal extension of the fluid throttle screen according to the present invention, because of which there is no abrupt pressure drop nor the swirl formations accompanying it, which are responsible for the occurrence of a broadband noise level. The pressure reduction in the fluid throttle screen according to an exemplary embodiment of the present invention occurs via wall friction on the individual friction elements, so that through targeted dimensioning and implementation of the surface composition of the friction elements, undesired noise development may be avoided as much as possible.

In addition, the friction elements may be provided with holes which cause noise damping because of resonator effects, so that the fluid throttle screen additionally acts as a noise damper, which reduces the noise produced by the screen itself even further and, in addition, damps the noise occurring at other points of the climate control system, which is transmitted by the pipe in which the throttle screen is installed. The frequency range in which this damper effect is a maximum may be tailored to the requirements of the individual case by the hole geometry and the degree of perforation.

In order that no flow discontinuities are generated in the area of the fluid throttle screen, it is suggested that the individual friction elements of the plurality of friction elements be situated at least partially equidistant to one another over the extension of the fluid throttle screen in the flow direction.

To avoid possible discontinuities in the throttle screen according to the present invention, at which noises may occur due to flow swirls, the individual friction elements of the plurality of friction elements may be implemented as planar layered bodies, which are situated in relation to the pipe in such a way that the surface normals of the layered bodies extend orthogonally to the flow direction of the pipe. Alternatively, it would also be possible, for example, to implement the respective friction elements of the plurality of friction elements as pipes which are interleaved in one another and concentric to one another, so that their focal point center lines are each coincident and run in the flow direction.

According to a further exemplary embodiment of the fluid throttle screen according to the present invention, the individual friction elements of the plurality of friction elements may be arranged or adapted as layered bodies as explained above, the individual layered bodies being situated in relation to one another in such a way that they mutually intersect in multiple intersection lines, however, which extend in the flow direction of the pipe, so that a honeycomb-like structure which may have flow through it results in the flow direction. In this way, multiple small flow channels are provided, which may contribute especially effectively to the pressure reduction over the fluid throttle screen.

As already explained above, the noise development in specific frequency ranges may be influenced actively through a special implementation of the surface composition of the individual friction elements. Thus, it has been shown through experiments that an effective pressure reduction over the fluid throttle screen may be achieved while simultaneously avoiding noise development if the individual friction elements of the plurality of friction elements are implemented having a surface roughness whose R_{z} value is in the range between approximately 0.1 mm and 1.0 mm. With correspondingly large volume flow rate quantities, of course, it is also possible to exceed or fall below these values in specific boundaries, however.

Furthermore the individual friction elements of the plurality of friction elements are implemented as heating and/or cooling elements, so that a fluid flowing through the fluid throttle screen may be temperature controlled, i.e., either heated or cooled, using the friction elements. Temperature control of this type is necessary for the crew rest compartments in particular, which have their temperature controlled differently than the remaining cabin areas.

According to a further aspect of the present invention, it is suggested that a throttle screen having at least some of the features as described above be used in a climate control system of an aircraft which comprises multiple pipe branches in order to control the fluid volume flow rate in at least one pipe branch. Through the use of the throttle screens according to the present invention in the climate control system of an aircraft, the typically resulting noise level may be reduced as much as possible and, in addition, by using the throttle screens according to the present invention, the air flowing out at an air outlet may be temperature-controlled entirely individually by an aircraft passenger.

Finally, according to a further aspect of the present invention, a climate control system is suggested which comprises multiple pipe branches, at least one throttle screen as described above being installed in at least one pipe branch to control a fluid volume flow rate.

### Brief description of the drawings

In the following, the present invention is explained in greater detail with reference to the attached drawing. The figures illustrating the present invention solely represent an embodiment of the present invention as an example and are not to be seen as restricting the scope of protection in particular.
Figure 1 shows a cross-section through a known single-hole screen;
Figure 2 shows an isometric, partially cutaway illustration of a pipe branch having a fluid throttle screen according to the present invention;
Figure 3 shows a frontal view according to a further embodiment of a fluid throttle screen, viewed in the flow direction;
Figure 4 shows a frontal view according to still a further embodiment of a fluid throttle screen, viewed in the flow direction; and
Figure 5 shows a diagram to illustrate the noise reduction using a fluid throttle screen according to the present invention.

Identical or similar elements are identified using identical or corresponding reference numerals in all figures.

### Description of exemplary embodiments of the present invention

Firstly, a known single-hole screen as has been used until now for volume flow rate throttling in climate control systems will be described briefly with reference to Figure 1. Figure 1 shows a pipe branch 4 of a pipe system (not shown further) of a climate control system. A single-hole screen 1 is fitted in the pipe branch 4, which has a fluid flow Q flowing against it from the left. The single-hole screen I reduces the inflow Q in its quantity so that a reduced volume flow rate q flows after the single-hole throttle screen 1. Known single-hole throttle screens of this type have a very low thickness in the magnitude of 0.7 mm, which results in the volume flow rate being throttled down suddenly as a result of a very abrupt pressure drop, which causes a relatively strong swirl formation behind the single-hole screen 1. These swirls frequently result in a very strong noise development, which is to be avoided as much as possible, however.

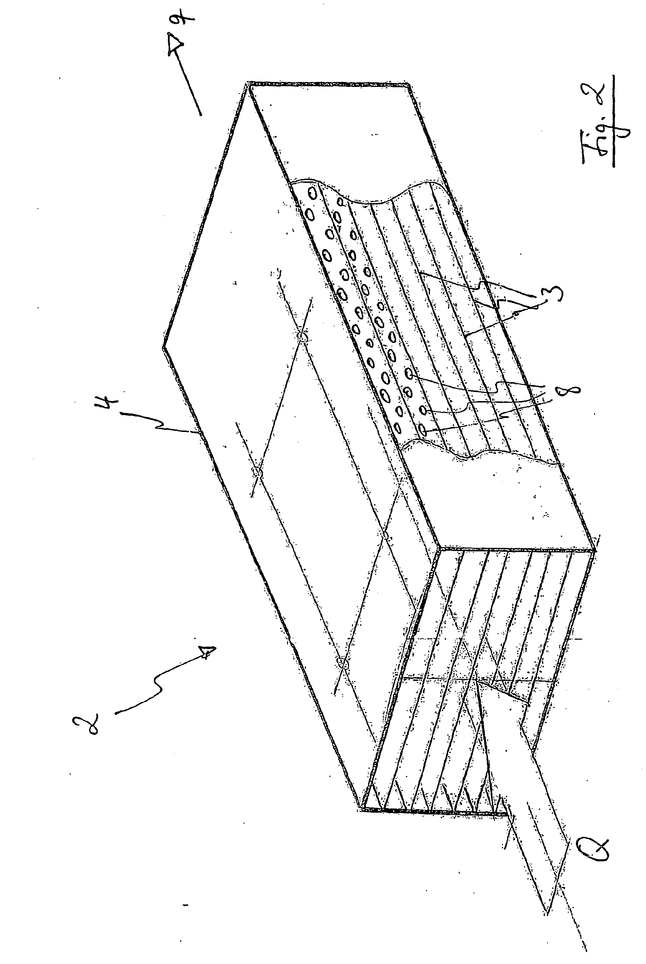

In order to prevent noise development of this type as a result of the sudden pressure drop at the screen, the present invention suggests a fluid throttle screen as is shown as an example in Figure 2. The fluid throttle screen 2 essentially comprises multiple friction elements 3, which are situated in the interior of a pipe 4. The individual friction elements 3 are situated at a distance to one another in the pipe 4 so that the volume flow rate of a fluid Q flowing against the fluid throttle screen 2 is reduced continuously to a throttled fluid volume flow rate q over the extension of the fluid throttle screen 2 in the flow direction as a result of friction on the individual friction elements 3.

As Figure 2 also shows, the individual friction elements 3 may be penetrated by multiple holes 8, as is shown for exemplary purposes on the two upper friction elements 3 of the fluid throttle screen 2 according to the present invention. In this way, sound damping of noise, which is generated at another point of the climate control system in which the fluid throttle screen 2 is installed and which propagates through the pipeline system of the climate control system up to the fluid throttle screen 2, may additionally be produced.

The individual friction elements 3 are situated equidistantly and at a distance to one another. In order to avoid dirt adhesion between the individual friction elements 3, the intervals between the individual friction elements 3 are not to be dimensioned significantly less than 5 mm. In contrast to the single-hole screen describing Figure 1, the fluid throttle screen 2 according to the present invention extends in the flow direction over a longer section, so that the volume flow rate Q may be reduced continuously as a result of friction on the individual friction elements. Experiments have shown that good results may already be achieved using fluid throttle screens 2 whose longitudinal extension in the flow direction is approximately 10 cm. With corresponding boundary conditions, however, it is also possible to give the fluid throttle screen 2 dimensions of multiple decimeters, up to 50 cm or more. In order to effectively avoid noise development, it has also been shown through experiments that the longitudinal extension of the fluid throttle screen according to the present invention its not to be selected as smaller than the smallest clearance of a pipe 4 having fluid flowing through it.

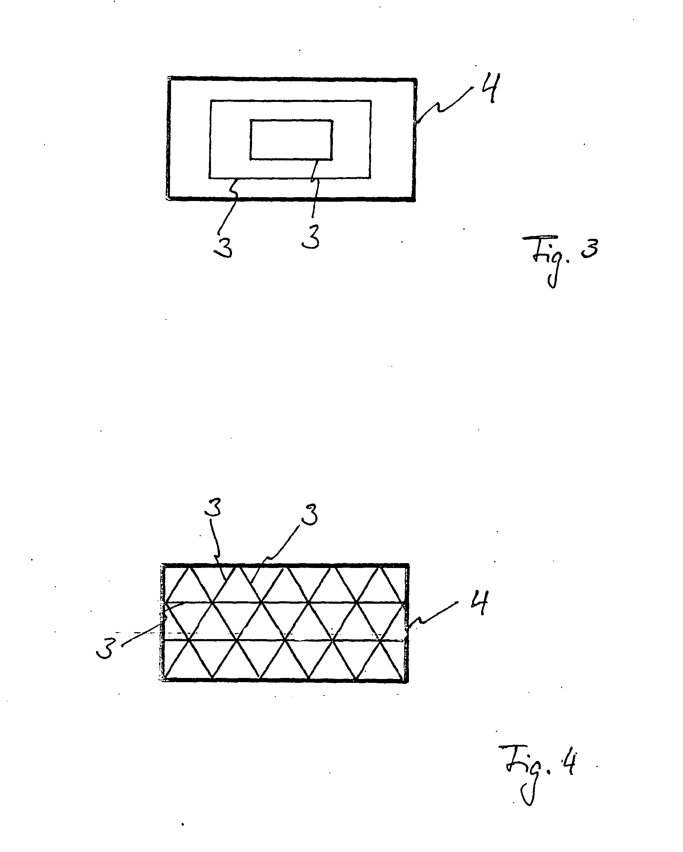

Alternatively to the arrangement of the friction elements 2 shown in Figure 2, these may also be implemented as (rectangular) pipes interleaved in one another, as shown in Figure 3. The individual friction elements 3 implemented as pipes are each situated concentrically to one another and also in relation to the pipe having fluid flowing through it, so that the particular focal point center lines are each coincident in the flow direction.

A further alternative of a conceivable arrangement of the friction elements 3 is shown in Figure 4, in which the friction elements 3 are situated transversely to one another in such a way that they intersect in multiple intersection lines in the flow direction, which also extend in the flow direction, so that a honeycomb-like structure in the form of triangular pipe bodies results viewed in the flow direction. Of course, the friction elements 3 may also form rectangular or hexagonal pipe bodies.

The friction elements 3 may be manufactured from nearly any material, but it is suggested that the friction elements 3 be manufactured from fiberglass-reinforced plastic (GRP) or carbon-fiber-reinforced plastic (CFRP). The desired surface roughnesses of the friction elements 3 may be artificially generated in the range between 0.1 mm and 1.0 mm especially easily in this way.

Finally, the noise reduction achievable using the fluid throttle screen 2 according to the present invention in relation to a typical single-hole throttle screen 1 is explained graphically with reference to Figure 5. The curve 5 illustrates the frequency-dependent noise development L of a typical single-hole throttle screen. In contrast to this, the curve 6 illustrates the frequency-dependent noise development of a fluid throttle screen according to the present invention. The noise development which is generated by the fluid throttle screen according to the present invention also rises in the high-frequency range from approximately 1300 Hz, but it never reaches the noise level which is generated by a known single-hole throttle screen 1. The fluid throttle screen according to the present invention has been shown to be especially effective, however, in the low-frequency range up to approximately 1300 Hz, in which a maximum noise reduction of up to approximately 15 dB may be achieved.

If the friction elements are additionally also provided with the holes described above and the effective frequency range is tailored to the high frequency range, higher damping may also be achieved, so that over all a frequency response may be achieved as indicated in Figure 5 in the form of Figure 7.

In addition it should be pointed out that "comprising" does not exclude other elements or steps, and "a" or "one" does not exclude a plural number. Furthermore, it should be pointed out that features or steps which have been described with reference to one of the above exemplary embodiments can also be used in combination with other features or steps of other exemplary embodiments described above. Reference characters in the claims are not to be interpreted as limitations.

### List of reference numerals

- 1: Single-hole throttle screen
- 2: Layered throttle screen
- 3: Friction elements
- 4: Pipe
- 5: Noise output curve of a single-hole screen
- 6: Noise output curve of a layered throttle screen
- 7: Noise output curve of a layered throttle screen penetrated by holes
- 8: Holes
- Q: Fluid volume flow rate
- q: Throttled fluid volume flow rate

## Claims

1. A fluid throttle screen for controlling a fluid volume flow rate in a pipe (4) having a plurality of flat friction elements (3) extending in a flow direction of the pipe (4), wherein the individual friction elements (3) of the plurality of friction elements are arranged at a distance and parallel to one another such that a fluid flowing against the fluid throttle screen (2) has its volume flow rate (Q) continuously throttled over the extension of the fluid throttle screen (2) in the flow direction as a result of friction on the individual friction elements (3) of the multiple friction elements, **charaterised in that** the individual friction elements (3) of the plurality of friction elements are arranged to control the temperature of a fluid flowing through the fluid throttle screen (2).

2. The fluid throttle screen of claim 1,
wherein individual friction elements (3) of the plurality of friction elements are penetrated by a plurality of holes (8).

3. The fluid throttle screen of claim 1 or 2,
wherein the individual friction elements (3) of the plurality of friction elements are arranged at least partially equidistant to one another over the extension of the fluid throttle screen (2) in the flow direction.

4. The fluid throttle screen of one of claims I through 3,
wherein the individual friction elements (3) of the multiple friction elements are arranged as planar layered bodies, whose surface normals extend orthogonally to the flow direction of the pipe (4).

5. The fluid throttle screen of one of claims 1 or 2,
wherein the individual friction elements (3) of the plurality of friction elements are arranged as interleaved pipes, whose focal point center lines are each coincident and run in the flow direction.

6. The fluid throttle screen of one of claims 1 or 2
wherein the individual friction elements (3) of the plurality of friction elements are arranged as planar layered bodies, which are situated in relation to one another in such a way that they mutually intersect in multiple intersection lines, which extend in the flow direction, so that a honeycomb-like structure results in the flow direction.

7. The fluid throttle screen of one of the preceding claims,
wherein the individual friction elements (3) of the plurality of friction elements have a surface roughness whose R_{z} value is approximately in the range between 0.1 mm and 1.0 mm.

8. A use of a fluid throttle screen (2) of one of claims 1 through 7 in a climate control system of an aircraft, which comprises multiple pipe branches, for controlling the fluid volume flow rate (Q) in at least one pipe branch.

9. A climate control system in an aircraft having an air distribution system comprising multiple pipe branches, wherein at least one fluid throttle screen (2) of one of claims 1 through 7 is installed in a pipe branch to control a fluid volume flow rate (Q).

## Patentansprüche

1. Fluiddrosselblende zur Steuerung eines Fluiddurchflusses in einem Rohr (4) mit einer Vielzahl sich in einer Strömungsrichtung des Rohres (4) erstreckender, ebener Reibungselemente (3), wobei die einzelnen Reibungselemente (3) der Vielzahl an Reibungselemente derart beabstandet und parallel zueinander angeordnet sind, dass ein die Fluiddrosselblende (2) anströmendes Fluid in seinem Durchfluss (Q) über die Erstreckung der Fluiddrosselblende (2) in Strömungsrichtung infolge Reibung an den einzelnen Reibungselementen (3) der Vielzahl an Reibungselementen kontinuierlich gedrosselt wird, **dadurch gekennzeichnet, dass** die einzelnen Reibungselemente (3) der Vielzahl an Reibungselementen ausgebildet sind, um die Temperatur eines durch die Fluiddrosselblende (2) hindurchströmenden Fluids zu steuern.

2. Fluiddrosselblende gemäß Anspruch 1,
wobei einzelnen Reibungselemente (3) der Vielzahl an Reibungselementen mit einer Vielzahl an Bohrungen (8) durchsetzt sind.

3. Fluiddrosselblende gemäß Anspruch 1 oder 2,
wobei die einzelnen Reibungselemente (3) der Vielzahl an Reibungselementen über die Erstreckung der Fluiddrosselblende (2) in Strömungsrichtung hinweg zumindest abschnittsweise äquidistant zueinander angeordnet sind.

4. Fluiddrosselblende gemäß einem der Ansprüche 1 bis 3,
wobei die einzelnen Reibungselemente (3) der Vielzahl an Reibungselementen als flächige Schichtkörper ausgebildet sind, deren Flächennormale sich orthogonal zu der Strömungsrichtung des Rohres (4) erstreckt.

5. Fluiddrosselbkende gemäß einem der Ansprüche 1 oder 2,
wobei die einzelnen Reibungselemente (3) der Vielzahl an Reibungselemente als ineinander liegende Röhren angeordnet sind, deren zentrale Brennpunktlinien zusammenfallen und sich in Flussrichtung erstrecken.

6. Fluiddrosselblende gemäß einem der Ansprüche 1 oder 2,
wobei die einzelnen Reibungselemente (3) der Vielzahl an Reibungselementen als flächige Schichtenkörper ausgebildet sind, die derart zueinander angeordnet sind, dass sie sich gegenseitig in einer Vielzahl an Schnittlinien schneiden, welche sich in Strömungsrichtung erstrecken, so dass sich in Strömungsrichtung eine wabenartige Struktur ergibt.

7. Fluiddrosselblende gemäß einem der voranstehenden Ansprüche,
wobei die einzelnen Reibungselemente (3) der Vielzahl an Reibungselementen eine Oberflächenrauheit aufweisen, deren R_{z}-Wert im etwa Bereich zwischen 0,1 mm und 1,0 mm liegt.

8. Verwendung einer Fluiddrosselblende (2) nach einem der Ansprüche 1 bis 7 in einer Klimaanlage eines Flugzeugs, welche eine Vielzahl an Rohrästen umfasst, um damit zumindest in einem Rohrast den Fluiddurchfluss (Q) zu steuern.

9. Klimaanlage in einem Flugzeug mit einem eine Vielzahl an Rohrästen umfassenden Luftverteilungssystem, wobei in einem Rohrast zur Steuerung eines Fluiddurchflusses (Q) wenigstens eine Fluiddrosselblende (2) nach einem der Ansprüche 1 bis 7 eingebaut ist.

## Revendications

1. Organe de réduction de débit de fluide destiné à commander un débit volumique de fluide dans une conduite (4) ayant une pluralité d'éléments de frottement plats (3) s'étendant dans une direction d'écoulement de la conduite (4), dans lequel les éléments de frottement individuels (3) de la pluralité d'éléments de frottement sont agencés à distance et parallèles les uns aux autres de telle sorte qu'un fluide s'écoulant contre l'organe de réduction de débit de fluide (2) a son débit volumique (Q) étranglé de manière continue le long de l'organe de réduction de débit de fluide (2) dans la direction d'écoulement en résultat du frottement sur les éléments de frottement individuels (3) des multiples éléments de frottement, **caractérisé en ce que** les éléments de frottement individuels (3) de la pluralité d'éléments de frottement, sont agencés pour commander la température d'un fluide s'écoulant à travers l'organe de réduction de débit de fluide (2).

2. Organe de réduction de débit de fluide selon la revendication 1,
dans lequel une pluralité de trous (8) pénètrent dans des éléments de frottement individuels (3) de la pluralité d'éléments de frottement.

3. Organe de réduction de débit de fluide selon la revendication 1 ou 2,
dans lequel les éléments de frottement individuels (3) de la pluralité d'éléments de frottement sont agencés au moins partiellement équidistants les uns des autres le long de l'organe de réduction de débit de fluide (2) dans la direction d'écoulement.

4. Organe de réduction de débit de fluide selon l'une des revendications 1 à 3,
dans lequel les éléments de frottement individuels (3) des multiples éléments de frottement sont agencés sous forme de corps plans en couches, dont les normales à la surface s'étendent orthogonalement à la direction d'écoulement de la conduite (4).

5. Organe de réduction de débit de fluide selon l'une des revendications 1 ou 2,
dans lequel les éléments de frottement individuels (3) de la pluralité d'éléments de frottement sont agencés sous forme de conduites entrelacées, dont les lignes de centre de gravité sont chacune coïncidentes et s'étendent dans la direction d'écoulement.

6. Organe de réduction de débit de fluide selon l'une des revendications 1 ou 2,
dans lequel les éléments de frottement individuels (3) de la pluralité d'éléments de frottement sont agencés sous forme de corps plans en couches, lesquels sont disposés les uns par rapport aux autres de manière à ce qu'ils se coupent mutuellement sur de multiples lignes d'intersection, lesquelles s'étendent dans la direction d'écoulement, de telle sorte qu'une structure analogue à un nid d'abeille est produite dans la direction d'écoulement.

7. Organe de réduction de débit de fluide selon l'une des revendications précédentes,
dans lequel les éléments de frottement individuels (3) de la pluralité d'éléments de frottement ont une rugosité de surface dont la valeur R_{z} est approximativement dans la plage entre 0,1 mm et 1,0 mm.

8. Utilisation d'un organe de réduction de débit de fluide (2) selon l'une des revendications 1 à 7 dans un système de climatisation d'un avion, lequel comporte de multiples embranchements de conduite, pour commander le débit volumique (Q) de fluide dans au moins un embranchement de conduite.

9. Système de climatisation dans un avion ayant un système de distribution d'air comportant de multiples embranchements de conduite, dans lequel au moins un organe de réduction de débit de fluide (2) selon l'une des revendications 1 à 7 est installé dans un embranchement de conduite pour commander un débit volumique (Q) de fluide.
